# FASCICULE DE BREVET EUROPEEN

(11) **EP 2 909 499 B1**
(45) Date de publication et mention de la délivrance du brevet: **17.04.2019**
(21) Numéro de dépôt: 13805433.3
(22) Date de dépôt: 17.10.2013
(51) Int. Cl.: F16F 9/06, F15B 1/10, B64C 1/14

(54) **DISPOSITIF D'ASSISTANCE À UNE MANOEUVRE DE PORTE D'UN AÉRONEF**
VORRICHTUNG ZUR UNTERSTÜTZUNG DES BETRIEBS EINER FLUGZEUGTÜR
DEVICE FOR ASSISTING THE OPERATION OF AN AIRCRAFT DOOR

(30) Priorité: 18.10.2012 FR 1202790
(43) Date de publication de la demande: 26.08.2015
(73) Titulaire: RATIER-FIGEAC, 46100 Figeac (FR)
(72) Inventeur: PROUZET, Bertrand, 46100 Figeac (FR); BERGONNIER, Hélène, 46100 Figeac (FR); DELBOS, Eric, 46120 Lacapelle-Marival (FR)
(74) Mandataire: Cabinet Morelle & Bardou SC
(86) Numéro de dépôt international: PCT/FR2013/052485
(87) Numéro de publication internationale: WO 2014/060705

(56) Documents cités:
- DE-A1-102007 036 487
- DE-U1- 29 702 927
- GB-A- 489 618
- US-A1- 2006 180 418

## Description

La présente invention concerne un dispositif d'assistance à une manoeuvre de porte d'un aéronef intégrant éventuellement un amortisseur. On entend ici par manoeuvre de porte soit l'ouverture de celle-ci, soit sa fermeture et éventuellement l'ouverture et la fermeture de la porte.

Selon le type d'aéronef, il existe différents types de portes pour permettre l'accès à l'aéronef. Ainsi par exemple la porte sera adaptée à la taille de l'aéronef. Ensuite, sur un aéronef destiné au transport de passagers, les portes utilisées pour l'embarquement et le débarquement des passagers ne seront pas les mêmes que celles utilisés pour le chargement et déchargement de leurs bagages. Les portes des issues de secours présenteront aussi éventuellement une structure différente de celle utilisée habituellement pour l'embarquement.

L'invention concerne plus particulièrement les portes d'aéronef pivotant autour d'un axe sensiblement horizontal (bien entendu lorsque l'aéronef correspondant est au sol), c'est-à-dire les portes pour lesquelles lors de l'ouverture ou bien lors de la fermeture le poids de la porte vient s'opposer à la manoeuvre de la porte. Encore plus particulièrement, l'invention vise des portes destinées au passage des passagers. Il existe ainsi des portes de passagers d'aéronef qui s'ouvrent vers le bas et qui intègrent éventuellement un escalier permettant d'accéder à bord de l'aéronef. Ce type de porte se trouve principalement sur des aéronefs de transport de passagers destinés aux voyages d'affaires et/ou prévus pour le transport de quelques dizaines de passagers. Des portes pour passagers qui s'ouvrent vers le haut se trouvent par exemple au-dessus des ailes d'un aéronef et sont prévues le plus souvent uniquement en tant qu'issues de secours.

Il est alors connu d'utiliser un ou plusieurs ressorts à gaz pour faciliter l'ouverture -ou aussi la fermeture- d'une porte, d'un capot, d'un couvercle ou similaire et/ou pour tenir celui-ci en position ouverte, dans le domaine aéronautique ou dans d'autres domaines.

Dans l'état de la technique, il est connu d'associer un amortisseur à plusieurs ressorts à gaz ou hélicoïdaux de compression pour amortir l'ouverture de la porte correspondante, les ressorts compensant le poids de la porte.

Dans un domaine éloigné du domaine aéronautique, le document US-2006/0180418 montre un cylindre dans lequel coulissent deux pistons. Un premier piston comporte une tête de piston et une tige de piston et sépare dans le cylindre deux chambres remplies de liquide hydraulique. Un second piston est un piston "libre" séparant l'une des chambres remplies de liquide hydraulique d'une chambre remplie de gaz. L'étanchéité entre la chambre remplie de gaz et la chambre remplie de liquide hydraulique voisine est réalisée par un joint d'étanchéité disposé entre le second piston et la paroi interne du cylindre. Le second piston étant destiné à se mouvoir dans le cylindre, on ne peut ici empêcher des fuites de gaz hors de la chambre remplie de gaz provoquant inévitablement une modification des caractéristiques du système décrit et présenté dans ce document.

Le document DE-297 02 927 U1 concerne quant à lui un ressort à gaz amorti à l'aide d'un fluide destiné plus particulièrement à une suspension de bicyclette. Ici, une chambre remplie de gaz est séparée du fluide hydraulique utilisé pour l'amortissement par une membrane souple. Une valve (portant la référence 16) est prévue pour permettre d'adapter la pression au sein de la chambre remplie de gaz, par exemple à l'aide d'une pompe à vélo.

Dans le domaine aéronautique, le document EP-0 876 954 B1 illustre notamment sur ses figures 3 et 9 (voir §[0019]) l'utilisation d'un amortisseur monté entre deux ressorts de compression pour assister l'ouverture d'une porte d'aéronef.

La présente invention a pour but d'optimiser cette solution dans laquelle on monte en parallèle des moyens permettant d'assister la manoeuvre d'une porte d'aéronef et des moyens d'amortissement permettant d'éviter une manoeuvre brutale. L'optimisation portera par exemple sur le poids du système (très important dans le domaine aéronautique) et sur sa facilité de montage.

Une autre problématique prise en compte par la présente invention concerne la fiabilité du dispositif d'assistance à une manoeuvre de porte d'aéronef. En effet, lorsque plusieurs éléments mécaniques distincts sont montés en parallèle le temps moyen avant défaillance de l'ensemble du mécanisme est inférieur au temps moyen avant défaillance de chacun des éléments pris isolément. La solution proposée par la présente invention permettra de préférence d'obtenir un temps moyen avant défaillance élevé. En effet, le dispositif pouvant être mis en oeuvre sur des issues de secours, il convient de pouvoir garantir que ce dispositif fonctionnera en cas de besoin.

Un autre but de l'invention est de fournir un dispositif d'assistance, avec de préférence une fonction amortissement associée, qui soit facile à mettre en oeuvre. Ainsi, le dispositif selon l'invention sera avantageusement, d'une part, facile à monter et, d'autre part, d'une masse limitée. On remarque en effet qu'en montant plusieurs éléments en parallèle, il convient de prévoir un nombre de fixations en conséquence. Avantageusement, le nombre de fixations nécessaires pour le montage d'un dispositif selon l'invention sera limité, de préférence à deux points d'attache, un premier point d'attache sur une partie dormante et un autre point d'attache sur la porte correspondante.

À cet effet, elle propose un dispositif d'assistance à une manoeuvre de porte d'aéronef comportant :
- un corps tubulaire associé à des premiers moyens de fixation,
- un piston muni d'une tige associée à de seconds moyens de fixation, le piston coulissant à l'intérieur du corps tubulaire et délimitant à l'intérieur de ce corps une chambre de travail remplie de fluide hydraulique,
- un accumulateur comportant une enveloppe rigide à l'intérieur de laquelle se trouvent des moyens de séparation définissant une chambre de compensation remplie de fluide hydraulique et en communication avec la chambre de travail, et une chambre remplie de gaz sous pression.

Selon la présente invention, l'enveloppe rigide est une enveloppe métallique réalisée par construction soudée, et les moyens de séparation dans l'accumulateur comportent un soufflet métallique soudé, d'une part, à l'enveloppe rigide de l'accumulateur qui présente une forme cylindrique circulaire, autour d'une ouverture de ladite enveloppe permettant de communiquer avec la chambre de travail et, d'autre part, à un fond, de manière à obtenir une enceinte contenant le gaz entièrement soudée.

Le dispositif selon la présente invention présente l'avantage tout d'abord d'être compact. La fonction ressort est assurée grâce au gaz sous pression qui par l'intermédiaire du fluide hydraulique agit globalement sur le piston dans le sens tendant à faire sortir la tige de piston hors du corps tubulaire. Il suffit alors d'adapter la pression au sein du fluide pour modifier la force agissant sur le piston. En outre, pour une application aéronautique, une grande fiabilité du système est assurée par la construction entièrement soudée de l'accumulateur, la chambre contenant le gaz sous pression étant fermée à l'aide de soudures, sans aucun joint. Cette structure permet ainsi une parfaite séparation et le gaz peut rester sous pression pendant de longues années sans aucune fuite.

Dans un dispositif d'assistance à une manoeuvre de porte d'aéronef selon la présente invention, la chambre remplie de gaz sous pression est remplie par exemple avec un gaz inerte tel de l'azote.

Pour permettre d'obtenir des pressions importantes au sein d'un dispositif d'assistance selon la présente invention, la chambre de travail comporte une vanne de remplissage. Il est ainsi possible de tout d'abord remplir la chambre prévue à cet effet de gaz sous pression et de l'emprisonner dans l'accumulateur en soudant l'ouverture par laquelle le gaz a été introduit puis de venir remplir le système avec du fluide hydraulique sous pression pour assurer la présence de fluide à la fois dans la chambre de travail, dans la chambre de compensation et entre ces deux chambres. Une fois la vanne de remplissage fermée, le système est entièrement sous pression. On remarquera qu'il est plus facile de réaliser une vanne vraiment étanche à un liquide hydraulique sous pression qu'à un gaz.

Pour maitriser la fonction amortissement qui est assurée par la circulation de fluide hydraulique lorsque le piston se déplace dans le corps tubulaire, on peut prévoir qu'une conduite assure la communication entre la chambre de travail et la chambre de compensation et qu'elle est munie d'un système d'amortissement, tel par exemple un clapet d'amortissement ou une valve à étrangleur.

Un amortissement peut également être réalisé lorsque le corps tubulaire présente une seconde chambre remplie de fluide hydraulique et séparée de la chambre de travail par le piston. Un passage peut alors être prévu dans le piston pour mettre en communication la seconde chambre et la chambre de travail. Pour un meilleur contrôle de l'amortissement réalisé au sein d'un tel passage, ledit passage peut comporter un système d'amortissement (valve à étrangleur ou similaire).

Le fond soudé au soufflet métallique peut être un piston de forme adaptée pour coulisser à l'intérieur de l'enveloppe rigide de l'accumulateur. Ce piston coulissera de préférence librement, le gaz sous pression pouvant de préférence passer librement de part et d'autre de ce piston.

La présente invention concerne également une porte d'aéronef, caractérisée en ce qu'elle comporte un dispositif d'assistance à une manoeuvre de porte tel que décrit plus haut.

Dans une telle porte d'aéronef, on peut avantageusement prévoir que le corps tubulaire du dispositif d'assistance à une manoeuvre de porte d'aéronef est monté de manière articulée sur la porte et que la tige de piston est montée de manière articulée sur un dormant associé à la porte. À l'inverse, le corps tubulaire du dispositif d'assistance à une manoeuvre de porte d'aéronef peut être monté de manière articulée sur un dormant associé à la porte et la tige de piston est montée de manière articulée sur la porte.

Une autre forme de réalisation adaptée à une porte d'aéronef à ouverture par basculement prévoit par exemple les caractéristiques suivantes :
- le corps tubulaire du dispositif d'assistance à une manoeuvre de porte d'aéronef est fixé sur la porte (ou bien en variante sur la structure de l'aéronef),
- la tige de piston porte à son extrémité libre opposée au piston une première poulie,
- le corps tubulaire du dispositif d'assistance à une manoeuvre de porte d'aéronef porte une deuxième poulie, et
- un câble présente une première extrémité fixée sur le corps tubulaire du dispositif d'assistance à une manoeuvre de porte, passe sur la première poulie puis sur la deuxième poulie, l'extrémité du câble opposée à la première extrémité venant s'enrouler ou se dérouler sur une troisième poulie montée pivotante sur la porte (ou bien dans la variante sur la structure de l'aéronef).

Dans cette forme de réalisation (et dans sa variante), on peut en outre prévoir que la troisième poulie est montée coaxialement à une quatrième poulie, la troisième poulie et la quatrième poulie étant entrainées en rotation par un moteur, et que la quatrième poulie reçoit un autre câble dont une première extrémité est fixée à un dormant associé à la porte (à la porte dans la variante envisagée) et une seconde extrémité vient s'enrouler ou se dérouler par rapport à la quatrième poulie de manière à commander l'ouverture ou la fermeture de la porte.

Des détails et avantages de la présente invention apparaitront mieux de la description qui suit, faite en référence au dessin schématique annexé sur lequel :
La figure 1 illustre un dispositif selon l'invention en perspective,
La figure 2 est une coupe transversale schématique illustrant le principe d'un dispositif selon la présente invention,
La figure 3 est une vue correspondant à la vue de la figure 1 et illustrant une variante de réalisation d'un dispositif selon la présente invention,
Les figures 4A et 4B illustrent une application d'un dispositif selon la présente invention à l'ouverture d'une porte d'aéronef, cette dernière étant montrée respectivement en position fermée et ouverte,
Les figures 5A à 5C illustrent une autre application d'un dispositif selon la présente invention pour un autre type de porte,
Les figures 5D et 5E montrent une variante de réalisation de l'application des figures 5A à 5C, et
Les figures 6 à 8 sont des vues similaires à la figure 2 pour des formes de réalisation d'un dispositif d'assistance à une manoeuvre de porte pour une application telle celle illustrée sur les figures 5A à 5E.

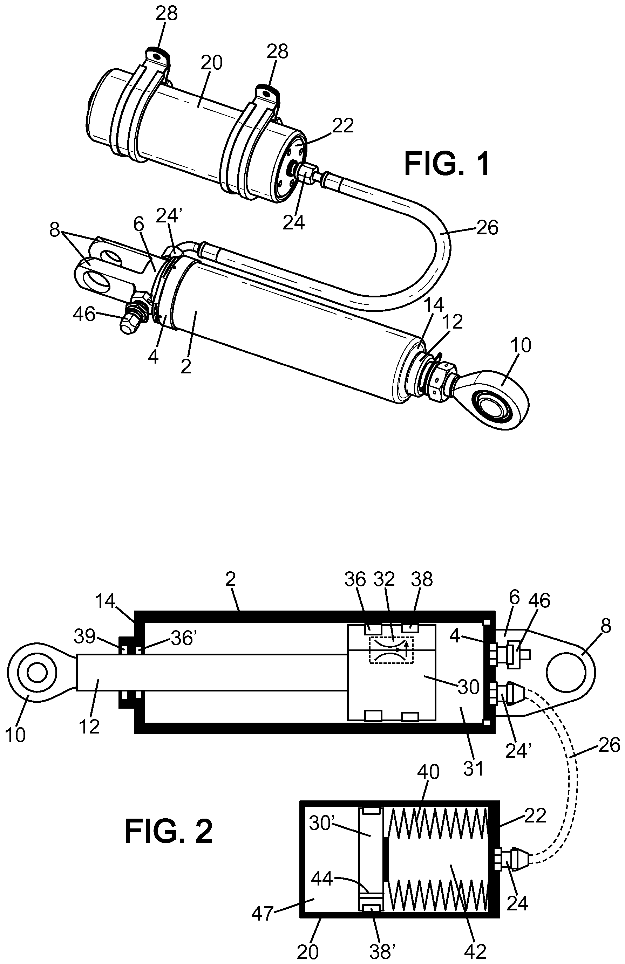

La figure 1 illustre une première forme de réalisation d'un dispositif d'assistance à une ouverture de porte d'aéronef avec amortissement selon la présente invention. On reconnaît sur cette figure deux modules reliés l'un à l'autre.

Un premier module, représenté en position inférieure sur la figure 1, présente un corps tubulaire 2 de forme globale cylindrique circulaire. Ce corps tubulaire 2 est fermé à une première extrémité par un couvercle 4 portant des moyens de fixation. Dans la forme de réalisation représentée, les moyens de fixation sont constitués par un étrier 6. La figure 1 montre uniquement un bord du couvercle 4. Ce couvercle comporte également un disque qui vient fermer le corps tubulaire 2 et qui s'étend perpendiculairement à l'axe longitudinal du corps tubulaire 2.

L'étrier 6 comporte une base fixée sur le couvercle 4 ou bien ne formant qu'une seule pièce avec celui-ci. Deux branches 8 s'étendent de la base de l'étrier 6. Ces branches 8 sont parallèles et présentent chacune un alésage, les deux alésages étant alignés de manière à pouvoir recevoir un axe (non représenté). L'étrier 6 peut alors recevoir entre ses branches 8 la rotule d'un embout à rotule (non représenté) semblable par exemple à l'embout à rotule 10 illustré sur la figure 1 à l'opposé du couvercle 4 par rapport au corps tubulaire 2.

L'embout à rotule 10 représenté sur le dessin est fixé à l'extrémité d'une tige de piston 12 qui fait saillie hors du corps tubulaire 2 en traversant un fond 14 qui s'étend de préférence perpendiculairement à l'axe longitudinal du corps tubulaire 2. Le fond 14 et la tige de piston 12 viennent fermer l'extrémité du corps tubulaire 2 opposée au couvercle 4.

Le second module, représenté en position supérieure sur la figure 1, est appelé aussi accumulateur et comporte une enveloppe 20 rigide. Cette enveloppe 20 présente une forme globale cylindrique circulaire tubulaire fermée à ses deux extrémités. Un socle 22 correspondant à l'une de ces extrémités, est équipé d'un raccord 24 sur lequel est branché un flexible 26 reliant les deux modules illustrés sur les figures 1 et 2.

Le second module est équipé de pattes de fixation 28 destinées à permettre le maintien de l'accumulateur sur un support, par exemple par vissage ou soudage.

La figure 2 est une vue en coupe longitudinale schématique du dispositif amortisseur et ressort illustré sur la figure 1. Contrairement à la figure 1, le premier module est disposé en haut de la figure 2 et son orientation droite/gauche a été inversée par rapport à la figure 1. Le second module est illustré en bas de la figure 2 mais garde la même orientation droite/gauche que sur la figure 1.

La figure 2 montre l'intérieur du corps tubulaire 2 ainsi que de l'accumulateur.

On retrouve à l'intérieur du corps tubulaire 2 un piston 30 porté par la tige de piston 12, ou ne formant qu'une seule pièce avec elle, à l'extrémité de cette tige opposée à l'extrémité recevant l'embout à rotule 10. Le piston 30 définit dans le corps tubulaire 2 une chambre de travail 31 entre lui et le fond 4.

Dans la forme de réalisation illustrée sur la figure 2, tout l'espace libre à l'intérieur du corps tubulaire 2 est rempli de fluide hydraulique (appelé couramment et plus simplement "huile"), tant la chambre de travail 31 que la chambre définie en dessous du piston 30, entre celui-ci et le fond 14 traversé par la tige de piston 12. Le piston 30 peut coulisser à l'intérieur du corps tubulaire 2 et du fluide hydraulique peut passer d'un côté à l'autre du piston 30. Pour réaliser ce passage, il est prévu à l'intérieur du piston 30 un système d'amortissement représenté sur la figure 2 à titre d'exemple par une valve à étrangleur 32. Le piston 30 présente deux faces sensiblement transversales par rapport à l'axe longitudinal du corps tubulaire 2 : une première de ces faces est située du côté de la tige de piston 12 et se trouve en vis-à-vis du fond 14 tandis que l'autre face transversale se trouve en vis-à-vis du couvercle 4. La valve à étrangleur 32 relie ces deux faces transversales.

Une étanchéité est réalisée entre le piston 30 et la paroi intérieure du corps tubulaire 2. Pour réaliser cette étanchéité, il est prévu un joint dynamique 36. Une bague 38 est quant à elle prévue pour le guidage du piston 30. Ainsi pour passer d'une face à l'autre du piston 30, le fluide hydraulique passe obligatoirement par le système d'amortissement (la valve à étrangleur 32 sur la figure 2). De cette manière, une fonction amortissement est réalisée au sein du corps tubulaire 2.

On remarque également sur la figure 2 la présence de moyens d'étanchéité entre la tige de piston 12 et le fond 14. On peut prévoir à ce niveau la présence d'un joint dynamique 36 et d'un joint racleur 39.

Lorsque le piston 30 se déplace dans le corps tubulaire 2, le volume de fluide hydraulique à l'intérieur du corps tubulaire 2 varie (du fait de la variation de la longueur de tige de piston 12 se trouvant à l'intérieur du corps tubulaire 2). Un raccord 24' est illustré sur la figure 2 sur le couvercle 4 pour permettre à du fluide d'entrer et sortir du corps tubulaire 2. Le raccord 24' a été illustré sur le couvercle 4 sur la figure 2 pour apparaître sur cette vue en coupe. En effet, ce raccord 24' est illustré sur la base de l'étrier 6 sur la figure 1. L'homme du métier comprendra que la position de ce raccord 24' est à adapter en fonction de contraintes extérieures. Il peut ainsi se trouver sur le couvercle 4, sur l'étrier 6, ou bien encore directement sur le corps tubulaire 2. Ce raccord 24' est raccordé au flexible 26 qui relie les deux modules illustrés sur les figures 1 et 2.

Comme indiqué précédemment, l'enveloppe rigide 20 présente une forme cylindrique circulaire tubulaire fermée à ses deux extrémités. Seule une entrée/sortie de fluide hydraulique est prévue par le raccord 24 se trouvant, dans la forme de réalisation représentée, au niveau d'une extrémité de l'enveloppe 20 rigide.

À l'intérieur de l'enveloppe 20 rigide se trouve un piston 30' qui est monté coulissant le long de la paroi intérieure de l'enveloppe 20. Une bague 38' réalise un guidage entre le piston 30' et la paroi intérieure de l'enveloppe 20.

L'enveloppe 20 contient également un soufflet métallique 40. Ce dernier est soudé, d'une part, sur le piston 30' et, d'autre part, sur l'extrémité de l'enveloppe 20 portant le raccord 24. Un soufflet métallique présente l'avantage d'être parfaitement étanche aux gaz. Le soufflet métallique 40 est soudé à l'intérieur d'une structure métallique elle-même soudée. On a donc une enceinte à gaz entièrement étanche. L'enveloppe 20 permet ainsi de maintenir de manière fiable une pression, même importante, pour le fluide hydraulique.

On trouve alors dans l'enveloppe 20 un premier volume limité essentiellement par la paroi intérieure du soufflet métallique 40 et formant une chambre de compensation 42 pour le fluide hydraulique se trouvant dans le corps tubulaire 2 et un second volume formant une chambre 47 remplie de gaz sous pression. Le flexible 26 permet de mettre en communication la chambre de compensation 42 avec la chambre de travail 31.

Les pressions à l'intérieur du système décrit plus haut peuvent être très importantes. Comme il ressort de la description qui précède, cette pression sera déterminée en fonction de la force nécessaire au niveau de la tige de piston 12. L'avantage du système proposé est de permettre un travail avec des pressions de plusieurs dizaines de bars. À titre d'exemple numérique non limitatif, on peut par exemple avoir une pression allant de 25 à 200 bars. On remarque que la chambre 47 remplie de gaz est entièrement soudée. Elle est donc parfaitement étanche.

Pour réaliser la chambre 47 entièrement étanche, et ensuite ajuster la pression dans le système, l'accumulateur est formée par l'assemblage soudé d'un tube et d'un fond, un ensemble formé par le piston 30' sur lequel est soudé une extrémité du soufflet métallique 40 et le socle 22 sur lequel est soudée l'autre extrémité du soufflet métallique 40 est mis en place dans le tube, le socle 22 étant alors lui aussi soudé sur le tube de l'enveloppe. On peut par exemple prévoir une valve de remplissage sur le fond de l'enveloppe 20 opposé au socle 22. Cette valve permet alors de remplir la chambre 47 d'azote (ou autre) à la pression souhaitée puis la valve de remplissage est soudée pour garantir une étanchéité parfaite de la chambre 47.

Le système est ensuite rempli de fluide hydraulique à la pression souhaitée. Ce remplissage se fait par une vanne de remplissage 46 illustrée sur la base de l'étrier 6 sur la figure 1 et sur le couvercle 4 sur la figure 2. L'homme du métier comprendra que l'emplacement de cette vanne de remplissage peut être adapté, pour tenir compte par exemple de contraintes extérieures. On peut également envisager de disposer cette vanne de remplissage 46 sur l'enveloppe 20 (en débouchant bien entendu à l'intérieur du soufflet métallique 40). Une étanchéité par joint est faite de préférence sur le volume contenant du fluide hydraulique, au niveau de la vanne de remplissage car il est possible de réaliser de manière fiable, par joint, une excellente étanchéité avec du fluide hydraulique sous pression.

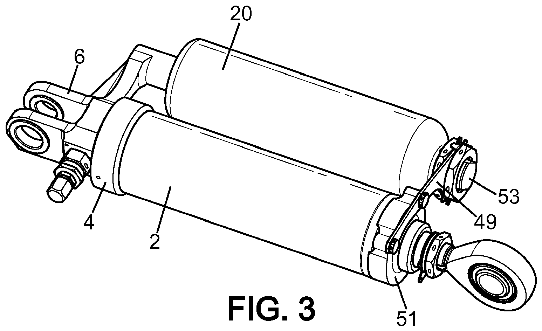

La figure 3 illustre une variante de réalisation dont le fonctionnement est similaire au dispositif illustré sur les figures 1 et 2. On reprend sur cette figure 3 les mêmes références que celles des figures 1 et 2 pour désigner des éléments similaires.

On retrouve dans la variante de réalisation illustrée sur la figure 3 un premier module et un second module mais ceux-ci sont reliés rigidement l'un à l'autre. Le premier module comporte un corps tubulaire 2 fermé à une première extrémité par un couvercle 4 portant des moyens de fixation représentés ici sous la forme d'un étrier 6.

Le second module comporte également une enveloppe 20 rigide qui présente par exemple une structure interne similaire à la structure interne de l'enveloppe 20 rigide illustrée sur les figures 1 et 2.

Pour réaliser la liaison entre les deux modules, il est proposé ici d'usiner une pièce qui regroupe le couvercle 4 et l'étrier 6 et intégrant en outre une conduite rigide permettant de réaliser une liaison entre la chambre de travail 31 à l'intérieur du corps tubulaire 2 et la chambre de compensation 42 de l'accumulateur. Du côté opposé au couvercle 4, il est proposé de relier le premier module au second module par un bras de liaison 49. Ce dernier peut être fixé par tous moyens sur le corps tubulaire 2 et sur l'enveloppe 20. À titre d'exemple simplement illustratif, on peut prévoir de visser le bras de liaison 49 par vissage sur une bague 51 fixée sur le corps tubulaire 2. Ce bras de liaison 49 peut aussi présenter un alésage destiné à recevoir une tige filetée 53 solidaire de l'enveloppe 20. Le bras de liaison 49 peut alors être maintenu sur la tige filetée 53 par deux écrous comme illustré sur la figure 3.

Selon une autre variante non illustrée, les deux modules pourraient être dans le prolongement l'un de l'autre et éventuellement mettre en oeuvre une même pièce tubulaire pour réaliser le corps tubulaire 2 et l'enveloppe 20. Pour cependant réaliser une chambre 47 remplie de gaz parfaitement étanche, il conviendra préférentiellement de séparer l'espace à l'intérieur de la pièce tubulaire créant ainsi aussi une séparation entre la chambre de travail 31 et la chambre de compensation 42.

Les dispositifs décrits ci-dessus permettent de pressuriser le fluide hydraulique pour éviter tout problème de cavitation en sortie du système d'amortissement (valve à étrangleur ou autre). Ceci permet de maintenir une grande performance de la fonction amortissement assurée par le dispositif, et ceci dans toutes les positions, même lorsque le dispositif est soumis à de fortes accélérations.

Ces dispositifs assurent également une fonction "ressort" dont la caractéristique est facilement ajustable en adaptant la pression du gaz et le volume de la chambre correspondante.

L'architecture des dispositifs décrits permet également de fournir une compensation en température efficace qui assure un fonctionnement tant à des températures (très) négatives qu'à des températures (très) élevées.

En outre, on remarque qu'il n'y a aucun contact entre le gaz et le fluide hydraulique qui sont donc parfaitement bien séparés l'un de l'autre. On supprime de la sorte tout risque de déjaugeage, d'émulsion et/ou de dilution et ceci quelle que soit la position de montage du système. Cette propriété est importante notamment lorsque le système est monté sur un élément mobile tel une porte d'aéronef. Dans le cas évoqué d'une utilisation sur une porte de secours, il est très important que le système soit encore opérationnel encore après un crash, c'est-à-dire après avoir subi une très forte accélération (plusieurs fois l'accélération terrestre G).

En outre, la séparation complète du gaz et du fluide hydraulique, réalisée sans utiliser notamment de joint dynamique, assure une grande fiabilité et une grande sécurité pour la fonction ressort qui n'est pas compromise.

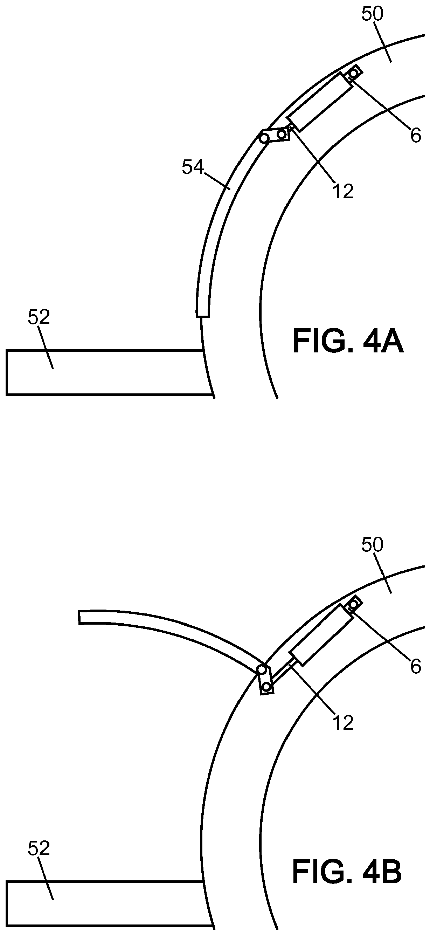

Les figures 4A et 4B illustrent une application d'un système d'assistance de manoeuvre de porte décrit ci-dessus. Sur ces figures, on a représenté très schématiquement et partiellement une section d'un fuselage 50 d'aéronef. On reconnaît également sur ces figures une aile 52. On utilise alors le dispositif illustré sur les figures 1 et 2 pour réaliser l'ouverture d'une porte 54. Dans l'application illustrée sur les figures 4A et 4B, l'étrier 6 du système est utilisé pour la fixation de celui-ci sur le fuselage 50 de l'aéronef tandis que la tige de piston 12 est reliée, par exemple à l'aide de l'embout à rotule 10, ou d'un autre moyen de fixation, à la porte 54.

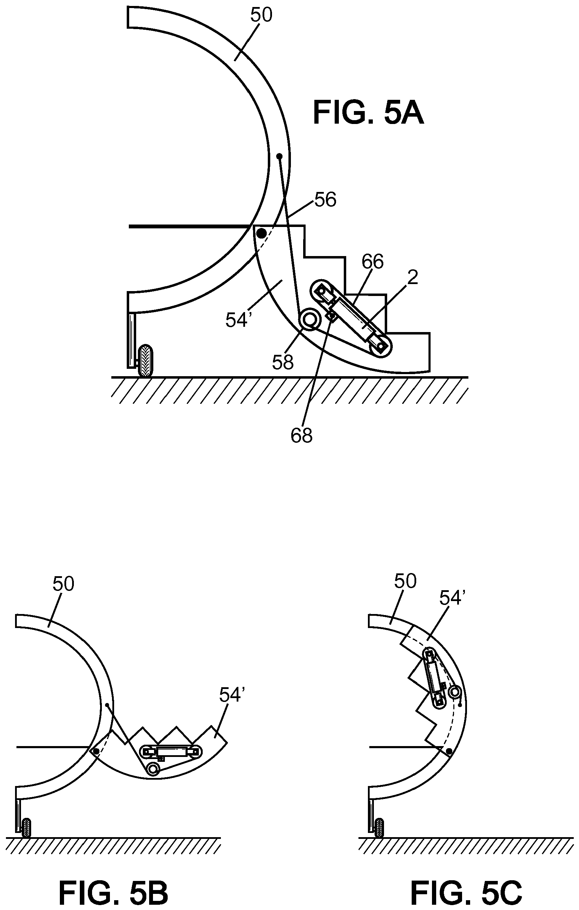

Les figures 5A à 5C illustrent une autre application pour un autre type de porte 54'. Alors que sur les figures 4A et 4B la porte 54 s'ouvre vers le haut, c'est-à-dire que le poids de la porte 54 s'oppose à son ouverture, la porte 54' des figures 5A à 5C s'ouvre vers le bas, le poids de la porte 54' entrainant la porte dans son mouvement d'ouverture.

Pour commander l'ouverture et la fermeture de la porte 54', il est prévu ici un système par câble. Un câble de liaison 56 relie la porte 54' à un point fixe du fuselage 50, par exemple à un dormant associé à la porte 54'. Du côté de la porte 54', une extrémité du câble de liaison vient s'enrouler ou se dérouler autour d'une poulie moteur 58. Cette dernière est entrainée en rotation par un moteur non représenté. La poulie moteur 58 est disposée dans un plan sensiblement vertical. L'homme du métier comprendra aisément que lorsque le câble de liaison 56 vient s'enrouler sur la poulie moteur 58 la porte 54' se ferme tandis qu'elle s'ouvre lorsque le câble de liaison 58 se déroule de la poulie moteur 58. Le câble de liaison 56 reste toujours tendu sous l'effet de la gravité.

Comme il ressort des figures 5A, 5B et 5C, un dispositif d'assistance à une manoeuvre de porte d'aéronef tel que décrit plus haut est associé au moteur, à sa poulie et au câble de liaison 56.

Le corps tubulaire 2 et l'accumulateur sont fixés sur la porte 54' de telle sorte que le piston 30 et sa tige de piston 12 soient orientés dans un plan vertical. La tige de piston 12 porte à son extrémité libre une première poulie 60 orientée dans un plan vertical. Une deuxième poulie 62 est fixée sur le corps tubulaire 2 à l'opposé de la première poulie 60, dans le même plan vertical que celle-ci. Une troisième poulie 64 est quant à elle prévue, toujours sensiblement dans le même plan vertical de la première poulie 60 et de la deuxième poulie 62, montée coaxialement à la poulie moteur 58.

Un câble d'assistance 66 présente une première extrémité fixée en un point d'attache 68 fixe, par exemple disposé sur le corps tubulaire 2. Ce câble d'assistance 66 passe ensuite sur la première poulie 60 avant de rejoindre la deuxième poulie 62. Enfin, l'autre extrémité du câble d'assistance 66 est attachée à la troisième poulie 64 et vient s'enrouler ou se dérouler sur celle-ci.

Lorsque le moteur entraine la poulie moteur 58, on suppose qu'il entraine également la troisième poulie 64. En fonction de l'enroulement du câble d'assistance 66 sur la troisième poulie 64, la longueur "utile" du câble d'assistance 66 est plus ou moins grande. Cette longueur détermine la position du piston 30 dans le corps tubulaire 2 par action sur la tige de piston 12. Comme illustré sur les figures 5A à 5C, on prévoit par exemple que la tige de piston 12 est rentrée sensiblement au maximum dans le corps tubulaire 2 lorsque la porte 54' est ouverte et est sensiblement en bout de course de sortie lorsque la porte 54' est fermée (figure 5C). La figure 5B illustre une position intermédiaire. Le rayon de la troisième poulie 64 peut être adapté pour par exemple pouvoir diminuer la raideur du dispositif d'assistance et ainsi diminuer les variations de performances globales sur la plage de températures de fonctionnement.

Grâce à cette cinématique, le dispositif d'assistance à la manoeuvre de la porte 54' permet de contrôler la vitesse de la porte 54' lors de son ouverture du fait de sa fonction d'amortisseur. Dans une phase de fermeture de la porte 54', l'effet ressort du dispositif d'assistance à la manoeuvre permet de créer un couple compensant tout ou partie du poids de la porte 54'.

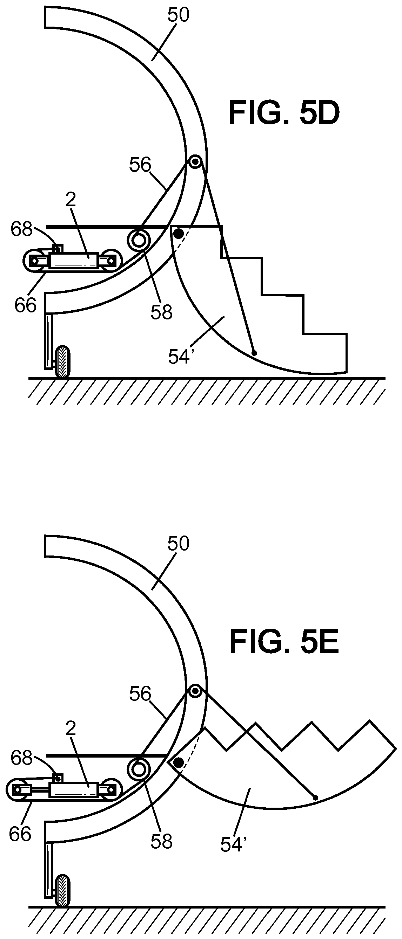

Les figures 5D et 5E illustrent un dispositif similaire à celui décrit en référence aux figures 5A à 5C mais ici le système assurant la fonction d'amortisseur et de ressort est monté sur une partie fixe de l'aéronef et non plus sur la porte mobile. On prévoit ici juste en plus, dans la forme de réalisation représentée, une poulie de renvoi qui peut se trouver par exemple montée sur une pièce fixe de l'aéronef ou bien sur une balustrade ou similaire susceptible de se mouvoir légèrement lors d'une ouverture / fermeture de la porte.

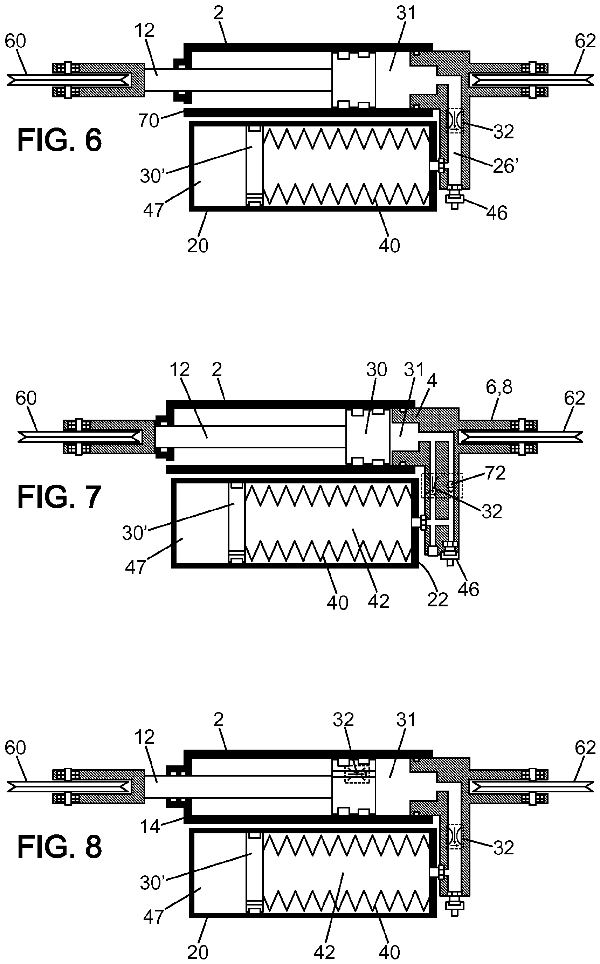

La figure 6 illustre une forme de réalisation d'un dispositif d'assistance d'ouverture de porte dans une coupe schématique similaire à la vue de la figure 2.

Pour les figures 6 à 8, les références utilisées sur les figures 1 à 3 et 5 sont reprises pour désigner des éléments similaires.

On reconnaît bien sur ces figures les deux modules qui sont raccordés dans ces modes de réalisation de manière similaire à la forme de réalisation de la figure 3. On a ainsi à chaque fois un corps tubulaire 2 monté parallèlement à une enveloppe 20.

Un piston 30 coulisse dans le corps tubulaire 2. Une tige de piston 12 s'étend à partir du piston 30 au dehors du corps tubulaire 2 en traversant un fond 14. Un couvercle 4, à l'opposé du fond 14 ferme le corps tubulaire 2 et délimite avec le piston 30 une chambre de travail 31 dans le corps tubulaire 2.

Dans l'enveloppe 20, un soufflet métallique 40 sépare une chambre de compensation 42 d'une chambre 47 remplie de gaz (N²) sous pression. Comme déjà expliqué plus haut en référence aux figures 1 à 3, l'enveloppe 20 se présente sous une forme tubulaire fermée à une extrémité par une construction soudée. Un socle 22 est soudé pour former l'autre extrémité de l'enveloppe 20. Le socle 22 forme avec le soufflet métallique 40 et un piston 30' un ensemble de pièces soudées les unes avec les autres de telle sorte que la chambre 47 remplie de gaz est une enceinte entièrement soudée dont le volume est variable grâce au soufflet métallique 40.

Par rapport aux formes de réalisation décrites plus haut, on remarque que le corps tubulaire 2 n'est pas entièrement rempli de fluide hydraulique. Seule la chambre de travail 31 est remplie de fluide hydraulique dans le corps tubulaire 2. Cette chambre de travail 31 est en communication par une conduite 26' avec la chambre de compensation 42 disposée dans l'enveloppe 20 à l'intérieur du soufflet métallique 40. La partie du corps tubulaire 2 située entre le piston 30 et le fond 14 est mise à l'air libre par un évent 70.

On retrouve sur le corps tubulaire 2 un étrier 6 qui porte ici la deuxième poulie 62. La tige de piston 12 porte quant à elle la première poulie 60 (à la place de la vis à oeil 10 des figures 1 à 3).

L'amortissement du dispositif est réalisé à l'aide de moyens d'amortissement de fluide se présentant dans la forme de réalisation illustrée sous la forme d'une valve à étrangleur 32 qui vient prendre place dans la conduite 26'. Une extrémité de la conduite 26' est borgne tandis que son autre extrémité est fermée par une valve de remplissage 46. Alors que dans la forme de réalisation de la figure 2 l'amortissement est réalisé au niveau du piston 30, il est ici réalisé dans la conduite 26'. Ces deux formes de réalisation de la fonction amortissement sont équivalentes. La valve à étrangleur 32 est montée de telle sorte que l'amortissement n'agit que lorsque la tige de piston 12 rentre dans le corps tubulaire 2, ce qui correspond à une ouverture de la porte. Elle régule alors le débit de retour du fluide hydraulique dans la chambre de compensation 42 de l'enveloppe 20 et donc la vitesse de rentrée de la tige de piston 12. La valve à étrangleur 32 n'a pratiquement aucune influence quand le débit de fluide s'inverse. De ce fait, l'amortissement est très faible dans le sens de la sortie de la tige correspondant à la fermeture de la porte (figure 5A vers figure 5C).

Pour diminuer l'effet d'amortissement lors de la sortie de tige de piston 12, il est proposé (figure 7) de monter un clapet anti-retour 72 en parallèle de la valve à étrangleur 32. Ce clapet anti-retour 72 est monté de telle sorte qu'il est fermé lorsque la tige de piston 12 rentre dans le corps tubulaire 2 et s'ouvre lorsque la tige de piston 12 sort du corps tubulaire 2. Ainsi, quand la porte s'ouvre (tige rentrante), le clapet anti-retour 72 n'a pas d'influence sur l'amortissement (tout le fluide passe par la valve à étrangleur 32 ou similaire) et quand la porte se ferme (tige sortante), la section de passage de fluide est augmentée entre la chambre de compensation 42 et la chambre de travail 31 facilitant ainsi le passage du fluide.

La forme de réalisation de la figure 8 illustre à titre d'exemple une combinaison de la forme de réalisation de la figure 2 (et/ou 3) et de la forme de réalisation de la figure 6. Il est proposé ici de réaliser un amortissement en entrée et en sortie de tige. On prévoit alors de disposer des moyens d'amortissement de passage de fluide dans le piston 30 et dans la liaison entre la chambre de travail 31 et la chambre de compensation 42. Il semble inutile de décrire dans le détail ici la forme de réalisation de la figure 8 : l'homme du métier comprendra son fonctionnement et sa structure à la lumière de la description des figures précédentes.

Les avantages du dispositif d'assistance à l'ouverture / fermeture de porte d'aéronef présentant une fonction ressort et une fonction amortissement associée ont été évalués.

Un premier avantage de ce système est son prix de revient. Celui-ci est inférieur au prix de revient d'un amortisseur et de deux ressorts à gaz. En effet, pour actionner une porte d'aéronef comme illustré sur les figures 4A et 4B, il convient de prévoir avec les moyens de l'art antérieur un amortisseur et deux ressorts à gaz (cf. EP-0 876 954).

Ensuite, le montage d'un système selon la présente invention est facilité. En effet, le système décrit plus haut se monte comme un amortisseur. On gagne donc ici le montage de deux ressorts à gaz. De ce fait, deux points de fixation suffisent alors que six sont nécessaires pour monter un amortisseur de l'art antérieur avec deux ressorts à gaz.

Dans le secteur aéronautique, la masse d'un système est importante. Pour une porte d'aéronef, l'utilisation d'un dispositif selon l'invention permet de réaliser un gain de masse estimé à plusieurs kilogrammes (kg) en ne prenant en compte que la masse du dispositif selon l'invention par rapport à la masse d'un amortisseur et de deux ressorts à gaz de l'art antérieur. Ce gain de masse est globalement plus important puisque seules deux fixations sont nécessaires pour un système selon la présente invention alors que six fixations sont nécessaires pour le montage d'un amortisseur et de deux ressorts à gaz de l'art antérieur.

Ces remarques concernant le prix le revient et la facilité de montage valent également pour l'application de l'invention à une porte d'aéronef à ouverture par basculement.

Enfin un avantage qui n'est pas le moindre est que la fiabilité d'un système selon l'invention est bien supérieure à la fiabilité d'un ensemble comportant un amortisseur et deux ressorts à gaz de l'art antérieur. Le temps moyen avant défaillance calculé pour un système selon l'invention est nettement supérieur à celui d'un ensemble comportant un amortisseur et deux ressorts à gaz. En utilisant les mêmes déterminations de temps moyen avant défaillance, d'une part, pour un système de l'art antérieur avec un amortisseur et deux ressorts à gaz et, d'autre part, pour un système selon la présente invention équivalent, le temps moyen avant défaillance sera très sensiblement supérieur, par exemple de 2 à 5 fois supérieur. Ce gain est considérable et est très avantageux car il permet de limiter les opérations de maintenance.

Le fait d'avoir une chambre remplie de gaz sans joint, entièrement soudée, limite grandement tout risque de fuite de gaz. Dans le domaine aéronautique, il est important de pouvoir garantir un bon fonctionnement d'un dispositif. Dans le cas présent, lorsque le dispositif est destiné à n'être utilisé qu'occasionnellement (assistance d'une issue de secours), il est d'autant plus important d'avoir un dispositif fiable que celui-ci est appelé à être utilisé dans des cas d'urgence.

La présente invention ne se limite pas à la forme de réalisation décrite ci-dessus à titre d'exemple non limitatif et à l'application illustrée sur les figures. Elle concerne toutes les variantes de réalisation évoquées et celles à la portée de l'homme du métier, dans le cadre des revendications ci-après.

Ainsi, on ne sortirait par exemple pas du cadre de la présente invention en prévoyant d'avoir un ensemble monobloc pour réaliser un système selon l'invention à la place des deux modules distincts reliés par un flexible ou une conduite rigide. Ces deux modules pourraient ne former qu'un seul ensemble. On pourrait par exemple avoir une enveloppe rigide intégrant la fonction d'accumulateur de gaz disposée dans le prolongement du corps tubulaire au sein duquel est réalisée la fonction amortisseur.

Dans la forme de réalisation correspondant à une ouverture de porte par basculement, on pourrait prévoir de réaliser plusieurs boucles avec le câble d'assistance autour du dispositif d'assistance selon l'invention. On peut alors diminuer la course du piston dans son corps tubulaire et il convient alors d'augmenter en contrepartie l'effort développé pour optimiser la masse de l'ensemble.

## Revendications

1. Dispositif d'assistance à une manoeuvre de porte d'aéronef comportant :
- un corps tubulaire (2) associé à des premiers moyens de fixation (6),
- un piston (30) muni d'une tige (12) associée à de seconds moyens de fixation (10), le piston (30) coulissant à l'intérieur du corps tubulaire (2) et délimitant à l'intérieur de ce corps une chambre de travail remplie de fluide hydraulique,
- un accumulateur comportant une enveloppe (20) rigide à l'intérieur de laquelle se trouvent des moyens de séparation (40) définissant une chambre de compensation (42) remplie de fluide hydraulique et en communication avec la chambre de travail, et une chambre (47) remplie de gaz sous pression,
**caractérisé en ce que** l'enveloppe (20) rigide est une enveloppe métallique réalisée par construction soudée,
**en ce que** les moyens de séparation dans l'accumulateur comportent un soufflet métallique (40) soudé, d'une part, à l'enveloppe (20) rigide de l'accumulateur qui présente une forme cylindrique circulaire, autour d'une ouverture de ladite enveloppe permettant de communiquer avec la chambre de travail (31) et, d'autre part, à un fond (30'), de manière à obtenir une enceinte (47) contenant le gaz entièrement soudée, et
**en ce qu'**un espace contenant du fluide hydraulique en dehors de l'accumulateur comporte une vanne de remplissage (46).

2. Dispositif d'assistance à une manoeuvre de porte d'aéronef selon la revendication 1, **caractérisé en ce que** la chambre (47) remplie de gaz sous pression est remplie avec un gaz inerte tel de l'azote.

3. Dispositif d'assistance à une manoeuvre de porte d'aéronef selon l'une des revendications 1 ou 2, **caractérisé en ce qu'**une conduite (26 ; 26') assure la communication entre la chambre de travail (31) et la chambre de compensation (42) et est munie d'un système d'amortissement (32).

4. Dispositif d'assistance à une manoeuvre de porte d'aéronef selon l'une des revendications 1 à 3, **caractérisé en ce que** le corps tubulaire (2) présente une seconde chambre remplie de fluide hydraulique et séparée de la chambre de travail (31) par le piston (30), et **en ce qu'**un passage dans le piston (30) met en communication la seconde chambre et la chambre de travail (31).

5. Dispositif d'assistance à une manoeuvre de porte d'aéronef selon la revendication 4, **caractérisé en ce que** le passage dans le piston (30) comporte un système d'amortissement (32).

6. Dispositif d'assistance à une manoeuvre de porte d'aéronef selon l'une des revendications 1 à 5, **caractérisé en ce que** le fond soudé au soufflet métallique (40) est un piston (30') de forme adaptée pour coulisser à l'intérieur de l'enveloppe (20) rigide de l'accumulateur.

7. Porte d'aéronef, **caractérisée en ce qu'**elle comporte un dispositif d'assistance à une manoeuvre de porte selon l'une des revendications 1 à 6.

8. Porte d'aéronef selon la revendication 7, **caractérisée en ce que** le corps tubulaire (2) du dispositif d'assistance à une manoeuvre de porte d'aéronef est monté de manière articulée sur la porte (54) et **en ce que** la tige de piston (12) est montée de manière articulée sur un dormant associé à la porte.

9. Porte d'aéronef selon la revendication 7, **caractérisée en ce que** le corps tubulaire (2) du dispositif d'assistance à une manoeuvre de porte d'aéronef est monté de manière articulée sur un dormant associé à la porte (54) et **en ce que** la tige de piston (12) est montée de manière articulée sur la porte (54).

10. Porte d'aéronef selon la revendication 7, **caractérisée en ce que** le corps tubulaire (2) du dispositif d'assistance à une manoeuvre de porte d'aéronef est fixé sur la porte (54'), **en ce que** la tige de piston (12) porte à son extrémité libre opposée au piston (30) une première poulie (60), **en ce que** le corps tubulaire (2) du dispositif d'assistance porte une deuxième poulie (62), et **en ce qu'**un câble (66) présente une première extrémité fixée sur le corps tubulaire (2) du dispositif d'assistance à une manoeuvre de porte, passe sur la première poulie (60) puis sur la deuxième poulie (62), l'extrémité du câble opposée à la première extrémité venant s'enrouler ou se dérouler sur une troisième poulie (64) montée pivotante sur la porte (54').

11. Porte d'aéronef selon la revendication 10, **caractérisée en ce que** la troisième poulie (64) est montée coaxialement à une quatrième poulie (58), la troisième poulie (64) et la quatrième poulie (58) étant entrainées en rotation par un moteur, et **en ce que** la quatrième poulie (58) reçoit un autre câble (56) dont une première extrémité est fixée à un dormant associé à la porte (54') et une seconde extrémité vient s'enrouler ou se dérouler par rapport à la quatrième poulie (58) de manière à commander l'ouverture ou la fermeture de la porte.

12. Porte d'aéronef selon la revendication 7, **caractérisée en ce que** le corps tubulaire (2) du dispositif d'assistance à une manoeuvre de porte d'aéronef est fixé sur une structure d'aéronef, **en ce que** la tige de piston (12) porte à son extrémité libre opposée au piston (30) une première poulie (60), **en ce que** le corps tubulaire (2) du dispositif d'assistance porte une deuxième poulie (62), et **en ce qu'**un câble (66) présente une première extrémité fixée sur le corps tubulaire (2) du dispositif d'assistance à une manoeuvre de porte, passe sur la première poulie (60) puis sur la deuxième poulie (62), l'extrémité du câble opposée à la première extrémité venant s'enrouler ou se dérouler sur une troisième poulie (64) montée pivotante sur la structure de l'aéronef.

13. Porte d'aéronef selon la revendication 12, **caractérisée en ce que** la troisième poulie (64) est montée coaxialement à une quatrième poulie (58), la troisième poulie (64) et la quatrième poulie (58) étant entrainées en rotation par un moteur, et **en ce que** la quatrième poulie (58) reçoit un autre câble (56) dont une première extrémité est fixée à la porte (54') et une seconde extrémité vient s'enrouler ou se dérouler par rapport à la quatrième poulie (58) de manière à commander l'ouverture ou la fermeture de la porte.

## Patentansprüche

1. Vorrichtung zur Unterstützung der Betätigung einer Flugzeugtür, umfassend:
- einen rohrförmigen Körper (2), der ersten Befestigungsmitteln (6) zugeordnet ist,
- einen Kolben (30), der mit einer Stange (12) versehen ist, die zweiten Befestigungsmitteln (10) zugeordnet ist, wobei der Kolben (30) im Inneren des rohrförmigen Körpers (2) gleitet und im Inneren dieses Körpers eine Arbeitskammer begrenzt, die mit einem Hydraulikfluid gefüllt ist,
- einen Speicher, der eine starre Hülle (20) aufweist, in deren Innerem sich Trennmittel (40) befinden, die Folgendes definieren: eine Ausgleichskammer (42), die mit Hydraulikfluid gefüllt ist und mit der Arbeitskammer in Verbindung steht, und eine Kammer (47), die mit Druckgas gefüllt ist,
**dadurch gekennzeichnet, dass** die starre Hülle (20) eine Metallhülle ist, die durch eine geschweißte Konstruktion verwirklicht wird,
dass die Trennmittel in dem Speicher einen Metallbalg (40) umfassen, der an Folgendes geschweißt ist: einerseits an die starre Hülle (20) des Speichers, die eine kreiszylindrische Form aufweist, um eine Öffnung der Hülle, die es ermöglicht, mit der Arbeitskammer (31) zu kommunizieren, und andererseits an einen Boden (30'), sodass ein vollständig geschweißtes Gehäuse (47) erhalten wird, welches das Gas enthält,
und dass ein Hydraulikfluid enthaltender Raum außerhalb des Speichers ein Füllventil (46) umfasst.

2. Vorrichtung zur Unterstützung der Betätigung einer Flugzeugtür nach Anspruch 1, **dadurch gekennzeichnet, dass** die mit Druckgas gefüllte Kammer (47) mit einem Inertgas wie etwa Stickstoff gefüllt ist.

3. Vorrichtung zur Unterstützung der Betätigung einer Flugzeugtür nach einem der Ansprüche 1 oder 2, **dadurch gekennzeichnet, dass** eine Leitung (26; 26') die Verbindung zwischen der Arbeitskammer (31) und der Ausgleichskammer (42) sicherstellt und mit einem Dämpfungssystem (32) versehen ist.

4. Vorrichtung zur Unterstützung der Betätigung einer Flugzeugtür nach einem der Ansprüche 1 bis 3, **dadurch gekennzeichnet, dass** der rohrförmige Körper (2) eine zweite Kammer aufweist, die mit Hydraulikfluid gefüllt ist und von der Arbeitskammer (31) durch den Kolben (30) getrennt ist, und dass ein Durchlass in dem Kolben (30) die zweite Kammer und die Arbeitskammer (31) miteinander in Verbindung setzt.

5. Vorrichtung zur Unterstützung der Betätigung einer Flugzeugtür nach Anspruch 4, **dadurch gekennzeichnet, dass** der Durchlass in dem Kolben (30) ein Dämpfungssystem (32) umfasst.

6. Vorrichtung zur Unterstützung der Betätigung einer Flugzeugtür nach einem der Ansprüche 1 bis 5, **dadurch gekennzeichnet, dass** der an den Metallbalg (40) geschweißte Boden ein Kolben (30') von geeigneter Form ist, um im Inneren der starren Hülle (20) des Speichers zu gleiten.

7. Flugzeugtür, **dadurch gekennzeichnet, dass** sie eine Vorrichtung zur Unterstützung der Türbetätigung nach einem der Ansprüche 1 bis 6 umfasst.

8. Flugzeugtür nach Anspruch 7, **dadurch gekennzeichnet, dass** der rohrförmige Körper (2) der Vorrichtung zur Unterstützung der Betätigung einer Flugzeugtür auf gelenkige Weise an der Tür (54) montiert ist und dass die Kolbenstange (12) auf gelenkige Weise an einem der Tür zugeordneten Rahmen montiert ist.

9. Flugzeugtür nach Anspruch 7, **dadurch gekennzeichnet, dass** der rohrförmige Körper (2) der Vorrichtung zur Unterstützung der Betätigung einer Flugzeugtür auf gelenkige Weise an einem der Tür (54) zugeordneten Rahmen montiert ist und dass die Kolbenstange (12) auf gelenkige Weise an der Tür (54) montiert ist.

10. Flugzeugtür nach Anspruch 7, **dadurch gekennzeichnet, dass** der rohrförmige Körper (2) der Vorrichtung zur Unterstützung der Betätigung einer Flugzeugtür an der Tür (54') befestigt ist, dass die Kolbenstange (12) an ihrem freien Ende, das dem Kolben (30) entgegengesetzt ist, eine erste Seilscheibe (60) trägt, dass der rohrförmige Körper (2) der Türunterstützungsvorrichtung eine zweite Seilscheibe (62) trägt, und dass ein Seil (66) ein erstes Ende aufweist, das an dem rohrförmigen Körper (2) der Vorrichtung zur Unterstützung der Türbetätigung befestigt ist, auf der ersten Seilscheibe (60) und anschließend auf der zweiten Seilscheibe (62) verläuft, wobei das Ende des Seils, das dem ersten Ende entgegengesetzt ist, auf eine dritte Seilscheibe (64) aufgewickelt oder von dieser abgewickelt wird, die schwenkbar an der Tür (54') montiert ist.

11. Flugzeugtür nach Anspruch 10, **dadurch gekennzeichnet, dass** die dritte Seilscheibe (64) koaxial mit einer vierten Seilscheibe (58) montiert ist, wobei die dritte Seilscheibe (64) und die vierte Seilscheibe (58) durch einen Motor drehangetrieben werden, und dass die vierte Seilscheibe (58) ein anderes Seil (56) aufnimmt, von dem ein erstes Ende an einem der Tür (54') zugeordneten Rahmen befestigt ist und ein zweites Ende derart auf die vierte Seilscheibe (58) aufgewickelt oder von ihr abgewickelt wird, dass das Öffnen oder Schließen der Tür gesteuert wird.

12. Flugzeugtür nach Anspruch 7, **dadurch gekennzeichnet, dass** der rohrförmige Körper (2) der Vorrichtung zur Unterstützung der Betätigung einer Flugzeugtür an einer Flugzeugstruktur befestigt ist, dass die Kolbenstange (12) an ihrem freien Ende, das dem Kolben (30) entgegengesetzt ist, eine erste Seilscheibe (60) trägt, dass der rohrförmige Körper (2) der Türunterstützungsvorrichtung eine zweite Seilscheibe (62) trägt, und dass ein Seil (66) ein erstes Ende aufweist, das an dem rohrförmigen Körper (2) der Vorrichtung zur Unterstützung der Türbetätigung befestigt ist, auf der ersten Seilscheibe (60) und anschließend auf der zweiten Seilscheibe (62) verläuft, wobei das Ende des Seils, das dem ersten Ende entgegengesetzt ist, auf eine dritte Seilscheibe (64) aufgewickelt oder von dieser abgewickelt wird, die schwenkbar an der Flugzeugstruktur montiert ist.

13. Flugzeugtür nach Anspruch 12, **dadurch gekennzeichnet, dass** die dritte Seilscheibe (64) koaxial mit einer vierten Seilscheibe (58) montiert ist, wobei die dritte Seilscheibe (64) und die vierte Seilscheibe (58) durch einen Motor drehangetrieben werden, und dass die vierte Seilscheibe (58) ein anderes Seil (56) aufnimmt, von dem ein erstes Ende an der Tür (54') montiert ist und ein zweites Ende derart auf die vierte Seilscheibe (58) aufgewickelt oder von ihr abgewickelt wird, dass das Öffnen oder Schließen der Tür gesteuert wird.

## Claims

1. Device for assisting the operation of an aircraft door, comprising:
- a tubular body (2) associated with first fastening means (6),
- a piston (30) provided with a rod (12) connected to second fastening means (10), the piston (30) sliding inside the tubular body (2) and defining inside said body a working chamber filled with hydraulic fluid,
- an accumulator comprising a rigid shell (20) inside of which is located a separation means (40) defining a compensation chamber (42) filled with hydraulic fluid and in communication with the working chamber, and a chamber (47) filled with pressurized gas,
**characterised in that** the rigid shell (20) is a metal shell formed by welded assembly,
**in that** the separation means in the accumulator comprises a metal bellows (40) welded on the one hand to the rigid shell (20) of the accumulator which has a circular cylindrical shape, around an opening of said shell which allows communicating with the working chamber (31), and on the other hand to a base (30'), so as to obtain an entirely welded enclosure (47) containing the gas, and
**in that** a space containing hydraulic fluid outside of the accumulator comprises a filling valve (46).

2. Device for assisting the operation of an aircraft door according to claim 1, **characterised in that** the chamber (47) filled with pressurized gas is filled with an inert gas such as nitrogen.

3. Device for assisting the operation of an aircraft door according to one of claims 1 or 2, **characterised in that** a pipe (26; 26') provides communication between the working chamber (31) and the compensation chamber (42) and is equipped with a damping system (32).

4. Device for assisting the operation of an aircraft door according to one of claims 1 to 3, **characterised in that** the tubular body (2) has a second chamber filled with hydraulic fluid and separated from the working chamber (31) by the piston (30), and **in that** a passage in the piston (30) provides communication between the second chamber and the working chamber (31).

5. Device for assisting the operation of an aircraft door according to claim 4, **characterised in that** the passage in the piston (30) comprises a damping system (32).

6. Device for assisting the operation of an aircraft door according to one of claims 1 to 5, **characterised in that** the base welded to the metal bellows (40) is a piston (30') having a shape adapted to slide within the rigid shell (20) of the accumulator.

7. Aircraft door, **characterised in that** it comprises a device for assisting the operation of door according to one of claims 1 to 6.

8. Aircraft door according to claim 7, **characterised in that** the tubular body (2) of the device for assisting the operation of an aircraft door is hingedly mounted on the door (54) and **in that** the piston rod (12) is hingedly mounted on a fixed frame associated with the door.

9. Aircraft door according to claim 7, **characterised in that** the tubular body (2) of the device for assisting the operation of an aircraft door is hingedly mounted on a fixed frame associated with the door (54) and **in that** the piston rod (12) is hingedly mounted on the door (54).

10. Aircraft door according to claim 7, **characterised in that** the tubular body (2) of the device for assisting the operation of an aircraft door is fixed to the door (54'), **in that** the piston rod (12) supports a first pulley (60) at its free end opposite the piston (30), **in that** the tubular body (2) of the device for assisting operation supports a second pulley (62), and **in that** a cable (66) has a first end attached to the tubular body (2) of the device for assisting the operation of a door, passes over the first pulley (60) then over the second pulley (62), the cable end opposite the first end winding or unwinding on a third pulley (64) pivotally mounted on the door (54').

11. Aircraft door according to claim 10, **characterised in that** the third pulley (64) is mounted coaxially to a fourth pulley (58), the third pulley (64) and the fourth pulley (58) being rotated by a motor, and **in that** the fourth pulley (58) receives another cable (56) having a first end fixed to a frame associated with the door (54') and a second end winds or unwinds on the fourth pulley (58) in a manner that controls the opening or closing of the door.

12. Aircraft door according to claim 7, **characterised in that** the tubular body (2) of the device for assisting the operation of an aircraft door is fixed to an aircraft structure, **in that** the piston rod (12) supports a first pulley (60) at its free end opposite the piston (30), **in that** the tubular body (2) of the device for assisting operation supports a second pulley (62), and **in that** a cable (66) has a first end attached to the tubular body (2) of the device for assisting the operation of a door, passes over the first pulley (60) then over the second pulley (62), the cable end opposite the first end winding or unwinding on a third pulley (64) pivotally mounted on the structure of the aircraft.

13. Aircraft door according to claim 12, **characterised in that** the third pulley (64) is mounted coaxially to a fourth pulley (58), the third pulley (64) and the fourth pulley (58) being rotated by a motor, and **in that** the fourth pulley (58) receives another cable (56) having a first end fixed to the door (54') and a second end that winds or unwinds on the fourth pulley (58) in a manner that controls the opening or closing of the door.
